# EUROPÄISCHE PATENTSCHRIFT

(11) **EP 3 046 710 B1**
(45) Veröffentlichungstag und Bekanntmachung des Hinweises auf die Patenterteilung: **03.07.2019**
(21) Anmeldenummer: 14772080.9
(22) Anmeldetag: 09.09.2014
(51) Int. Cl.: B23F 19/10, B21H 5/02

(54) **VERFAHREN ZUM ANFASEN UND GLÄTTEN VON VERZAHNTEN WERKSTÜCKEN**
METHOD FOR CHAMFERING AND POLISHING TOOTHED WORKPIECES
PROCÉDÉ DE BISEAUTAGE ET DE POLISSAGE DE PIÈCES DENTÉES

(30) Priorität: 16.09.2013 DE 102013218542
(43) Veröffentlichungstag der Anmeldung: 27.07.2016
(73) Patentinhaber: FELSOMAT GmbH & Co. KG, 75203 Königsbach-Stein (DE)
(72) Erfinder: THIJSSEN, Johan, B-3740 Bilzen (BE)
(74) Vertreter: Kohler Schmid Möbus Patentanwälte
(86) Internationale Anmeldenummer: PCT/EP2014/069120
(87) Internationale Veröffentlichungsnummer: WO 2015/036373

(56) Entgegenhaltungen:
- DE-C1- 4 130 927
- US-A- 3 894 418
- US-B1- 6 571 475

## Beschreibung

Die Erfindung betrifft ein Verfahren zur Bearbeitung eines verzahnten Werkstücks,
wobei das Werkstück auf einer sich drehenden Werkstückspindel aufgespannt ist und mit einem ersten und einem zweiten Werkzeugsatz in das Werkstück eingegriffen wird,
wobei zumindest auf einer ersten Seite des Werkstücks ein Anfasen an Zahnstirnkanten und ein Glätten von Zahnflanken nahe der Zahnstirnkanten erfolgt,
wobei der erste Werkzeugsatz auf der ersten Seite des Werkstücks jeweils mit einem keilförmigen Werkzeugabschnitt seitlich in die Zahnlücken am Werkstück eingreift, wobei an bezüglich einer Laufrichtung des Werkstücks vorderen Zahnflanken die Zahnstirnkanten angefast werden, und an bezüglich der Laufrichtung des Werkstücks hinteren Zahnflanken ein Glätten der Zahnflanken nahe der Zahnstirnkanten erfolgt,
und wobei der zweite Werkzeugsatz auf der ersten Seite des Werkstücks jeweils mit einem keilförmigen Werkzeugabschnitt seitlich in die Zahnlücken am Werkstück eingreift, wobei an bezüglich einer Laufrichtung des Werkstücks vorderen Zahnflanken ein Glätten der Zahnflanken nahe der Zahnstirnkanten
erfolgt, und an bezüglich der Laufrichtung des Werkstücks hinteren Zahnflanken die Zahnstirnkanten angefast werden.

Ein solches Verfahren ist aus der US 6,571,475 B1 bekannt geworden.

Grundlagen zum Anfasen und Glätten von wälzgefrästen Werkstücken sind beispielsweise aus T. Bausch et al., Innovative Zahnradfertigung, 3. Aufl. (2006), expert verlag, Renningen (DE), S. 307-310, bekannt geworden.

Beim Wälzfräsen werden mit den Zähnen eines Wälzfräsers Verzahnungen in ein Werkstück geschnitten, wobei das Werkstück und der Wälzfräser bei gegenseitigem Eingriff jeweils rotiert werden. Daran anschließend wir in der Regel ein Anfasen der Zahnstirnkanten des Werkstücks durchgeführt. Das Anfasen kann grundsätzlich zerspanend oder auch umformend erfolgen.

Beim umformenden Anfasen wird ein Abschnitt eines Anfaswerkzeugs an die Zahnstirnkanten des Werkstücks gedrückt, so dass sich das Material des Werkstücks lokal plastisch verformt. Dabei entsteht ein Sekundärgrat an der Stirnseite eines jeweiligen Zahns des Werkstücks (der typischerweise mit einem Schneidwerkzeug entfernt wird) und ein Materialaufwurf auf der Zahnflanke des jeweiligen Zahns. Dieser Materialaufwurf kann ohne einen zweiten Schnitt durch Glätten beseitigt werden, indem ein Abschnitt eines Glättwerkzeugs auf die Zahnflanke drückt und so den Materialaufwurf zurückwalzt.

Ein Werkzeugabschnitt für das Anfasen ist keilförmig aufgebaut und greift typischerweise seitlich in eine Zahnlücke des Werkstücks ein; in der Regel umfasst ein Anfaswerkzeugsatz zwei verzahnte Scheiben, die am Werkstück abrollen und von beiden Stirnseiten in das Werkstück eingreifen. Der aktive Werkzeugabschnitt liegt dabei beidseitig jeweils an einem Zahn des Werkstücks an. Aufgrund der wirkenden mechanischen Kräfte und der geometrischen Verhältnisse kann der Innenwinkel des keilförmigen Werkzeugabschnitts ca. 50° nicht überschreiten. Dadurch ist die Summe der Fasenwinkel der erzeugten, gegenüberliegenden Fasen der beiden anliegenden Zähne auf ca. 50° begrenzt (jeweils gemessen gegen die Schräge der Verzahnung bzw. der Verlaufsrichtung der Zahnflanken), aufgeteilt beispielsweise auf eine 20°-Fase und eine 30°-Fase.

Kleine Fasenwinkel haben den Nachteil, dass im Falle eines weiteren Materialabtrags (etwa durch einen zweiten Schnitt am Werkstück oder durch eine Hartfeinbearbeitung) ein großer Teil der Fase wieder verlorengeht. Auch ist der Schutz vor Überhärtung des Werkstücks bei der Wärmebehandlung beeinträchtigt, so dass es beim Einsatz der Werkstücke leichter zu Materialbrüchen kommen kann.

Zum Glätten wird ein Werkzeugabschnitt in die Zahnlücken eines Werkstücks eingeführt, wobei die Kanten des Werkzeugabschnitts beidseitig in einem flachen Winkel, meist um 2-4°, an den Zahnflanken der beiden umgebenden Zähne des Werkstücks anliegen. Ein Glättwerkzeugsatz kann ebenfalls über zwei verzahnte Scheiben, die am Werkstück abrollen, realisiert werden.

Die US 6,571,475 B1 beschreibt ein rotierendes Werkzeug mit einer Vielzahl von Zähnen, die jeweils mit einer steilen Anlageseite zum Anfasen und einer flachen Anlageseite zum Glätten ausgebildet sind. Dabei wechseln sich auf dem Werkzeug bezüglich einer Laufrichtung Zähne mit nach vorne gerichteter steiler Anlageseite und flacher Anlageseite ab. Ein Werkzeugzahnrad ähnlicher Bauart beschreibt die DE 41 30 927 C1.

Die US 3,894,418 zeigt eine Bearbeitung eines Werkstücks mit zwei einander gegenüberliegenden Werkzeugen, nämlich einem Glättwerkzeug und einem Anfaswerkzeug, an unterschiedlichen Stellen. Diese Werkzeuge nehmen ihre jeweilige Aufgabe jeweils vollständig allein war.

### Aufgabe der Erfindung

Der Erfindung liegt die Aufgabe zugrunde, ein Verfahren zum Anfasen und Glätten von verzahnten Werkstücken zur Verfügung zu stellen, mit dem auf einfache Weise größere Fasenwinkel an den Zahnstirnkanten des Werkstücks eingerichtet werden können.

### Kurze Beschreibung der Erfindung

Diese Aufgabe wird gelöst durch ein Verfahren der eingangs genannten Art, das dadurch gekennzeichnet ist,
dass der erste Werkzeugsatz auf der ersten Seite des Werkstücks eine Vielzahl der keilförmigen Werkzeugabschnitte auf einem Kegelrad umfasst, und der zweite Werkzeugsatz auf der ersten Seite des Werkstücks eine Vielzahl der keilförmigen Werkzeugabschnitte auf einem weiteren Kegelrad umfasst,
und dass der erste Werkzeugsatz und der zweite Werkzeugsatz an bezüglich eines ortsfesten Bezugssystems verschiedenen Stellen am Umfang des Werkstücks in das Werkstück eingreifen.

Die Erfindung sieht vor, mit den beiden Kanten eines keilförmigen Werkzeugabschnitts, der an einer (Stirn-)Seite eines Werkstücks zwischen zwei Zähnen des Werkstücks eingreift, unterschiedliche Funktionen wahrzunehmen: Die eine Kante besorgt das Anfasen an einem ersten anliegenden Zahn des Werkstücks, und die andere Kante besorgt das Glätten an einem zweiten anliegenden Zahn des Werkstücks. Da für das Glätten des zweiten Zahns nur ein flacher Anlagewinkel von typischerweise 5° oder weniger benötigt wird, steht für das Anfasen des ersten Zahns ohne weiteres ein Winkel von 40° oder mehr, oder sogar 45° oder mehr zur Verfügung, auch wenn die Winkelsumme am keilförmigen Werkstückabschnitt (Innenwinkel) aufgrund der mechanischen Kräfteverhältnisse und der geometrischen Verhältnisse auf ca. 50° begrenzt ist.

Um alle Zähne auf einer (Stirn-)Seite eines Werkstücks sowohl anzufasen als auch zu glätten, sind zwei Werkzeugsätze vorgesehen, die sich in der Bearbeitung der Zahnflanken des Werkstücks ergänzen. Die bezüglich einer Laufrichtung des Werkstücks bei der Anfas- und Glättbearbeitung vorderen Zahnflanken des Werkstücks werden über einen der Werkzeugsätze angefast und über den anderen der Werkzeugsätze geglättet, und die in Laufrichtung hinteren Werkstückflanken werden über den anderen Werkzeugsatz geglättet und über den einen Werkzeugsatz angefast. Entsprechendes kann mit den beiden Werkzeugsätzen für die gegenüberliegende (Stirn-)Seite des Werkstücks eingerichtet werden. Jeder Werkzeugsatz, genauer gesagt jeder keilförmige Werkzeugabschnitt eines Werkzeugsatzes, nimmt also im Rahmen der Erfindung sowohl eine Anfas- als auch eine Glättfunktion war.

Erfindungsgemäß ist vorgesehen, dass der erste Werkzeugsatz und der zweite Werkzeugsatz an verschiedenen Stellen am Umfang des Werkstücks in das Werkstück eingreifen. Dabei umfasst der erste Werkzeugsatz auf der ersten Seite des Werkstücks eine Vielzahl der keilförmigen Werkzeugabschnitte auf einem Kegelrad, und der zweite Werkzeugsatz auf der ersten Seite des Werkstücks eine Vielzahl der keilförmigen Werkzeugabschnitte auf einem weiteren Kegelrad. Die Werkzeugsätze können unabhängig voneinander gestaltet und verwendet werden, was das Verfahren vereinfacht.

Die keilförmigen Werkzeugabschnitte eines Werkzeugsatzes werden typischerweise durch die Zähne einer oder zweier Werkzeug-Zahnscheiben, die am Werkstück abgewälzt werden, ausgebildet; die Zahnscheiben sind kegelradartig ausgebildet. Man beachte, dass die keilförmigen Werkzeugabschnitte das Werkstück umformend bearbeiten, insbesondere beim Anfasen. Man beachte weiterhin, dass die keilförmigen Werkzeugabschnitte nicht in einer Spitze zu enden brauchen, solange nur ausreichend lange aufeinander zu laufende Anlegekanten (Anlageflächen) für die Anlage an den Zähnen des Werkstücks ausgebildet sind.

In der Regel greifen für die Anfas- und Glättbearbeitung die beiden Werkzeugsätze gleichzeitig in das Werkstück ein; es ist jedoch auch ein sich zeitlich mehrfach abwechselnder Eingriff möglich.

Wenn sich eine materialabtragende weitere Werkstückbearbeitung (etwa ein Schleifen oder eine andere Hartfeinbearbeitung) an das erfindungsgemäße Anfasen und Glätten anschließt, kann aufgrund der steileren Fasen im Rahmen der Erfindung grundsätzlich mehr Restfasenbereich am Werkstück zur Verfügung gestellt werden.

### Bevorzugte Ausführungsformen der Erfindung

Bei einer vorteilhaften Variante des erfindungsgemäßen Verfahrens erfolgt das Anfasen der Zahnstirnkanten jeweils mit einem Winkel von wenigstens 35°, bevorzugt wenigstens 40°, besonders bevorzugt wenigstens 45°, gemessen gegen eine Schrägung der Verzahnung am Werkstück. Der große Fasenwinkel erlaubt auch bei nachfolgendem Materialabtrag den Erhalt einer vergleichsweise großen Fasenlänge; Überhärtungsprobleme bei einer nachfolgenden Wärmebehandlung werden minimiert. Man beachte, dass der Schrägungswinkel auch 0° betragen kann; dann verläuft die Schrägung parallel zur Drehachse des Werkstücks. Man beachte weiterhin, dass erfindungsgemäße keilförmige Werkstückabschnitte bevorzugt einen Innenwinkel von 55° oder weniger, besonders bevorzugt 50° oder weniger, und weiterhin bevorzugt 48° oder weniger aufweisen, umgekehrt jedoch auch einen Innenwinkel von bevorzugt wenigstens 40°, besonders bevorzugt wenigstens 45° aufweisen.

Ebenfalls vorteilhaft ist eine Variante, bei der das Glätten jeweils mit einem Winkel von maximal 5°, bevorzugt maximal 4°, gemessen gegen eine Schrägung der Verzahnung am Werkstück, erfolgt. Dadurch verbleibt, bei einem begrenzten maximalen Innenwinkel eines keilförmigen Werkzeugabschnitts, ein vergleichsweise großer Fasenwinkel für eine Zahnstirnkante, die der geglätteten Zahnflanke gegenüberliegt.

Bevorzugt ist eine Verfahrensvariante, die vorsieht, dass auch auf einer zweiten Seite des Werkstücks ein Anfasen an Zahnstirnkanten und ein Glätten von Zahnflanken nahe der Zahnstirnkanten erfolgt,
dass der erste Werkzeugsatz auf der zweiten Seite des Werkstücks jeweils mit einem keilförmigen Werkzeugabschnitt seitlich in die Zahnlücken am Werkstück eingreift, wobei an bezüglich einer Laufrichtung des Werkstücks vorderen Zahnflanken ein Glätten der Zahnflanken nahe der Zahnstirnkanten erfolgt, und an bezüglich der Laufrichtung des Werkstücks hinteren Zahnflanken die Zahnstirnkanten angefast werden, und dass der zweite Werkzeugsatz auf der zweiten Seite des Werkstücks jeweils mit einem keilförmigen Werkzeugabschnitt seitlich in die Zahnlücken am Werkstück eingreift, wobei an bezüglich einer Laufrichtung des Werkstücks vorderen Zahnflanken die Zahnstirnkanten angefast werden, und an bezüglich der Laufrichtung des Werkstücks hinteren Zahnflanken ein Glätten der Zahnflanken nahe der Zahnstirnkanten erfolgt. Diese Variante stellt die erfindungsgemäße Anfas- und Glättbearbeitung auch der gegenüberliegenden Stirnseite des Werkstücks zur Verfügung. Bei der hier vorgeschlagenen Winkelaufteilung nimmt derselbe Werkzeugsatz bei derselben Zahnflanke jeweils an einer Seite das Anfasen und an der anderen Seite das Glätten vor, so dass der Krafteintrag am Werkstück und an den Werkzeugsätzen vergleichmäßigt wird.

Bei einer alternativen Verfahrensvariante ist vorgesehen, dass auch auf einer zweiten Seite des Werkstücks ein Anfasen an Zahnstirnkanten und ein Glätten von Zahnflanken nahe der Zahnstirnkanten erfolgt,
dass der erste Werkzeugsatz auf der zweiten Seite des Werkstücks jeweils mit einem keilförmigen Werkzeugabschnitt seitlich in die Zahnlücken am Werkstück eingreift, wobei an bezüglich einer Laufrichtung des Werkstücks vorderen Zahnflanken die Zahnstirnkanten angefast werden, und an bezüglich der Laufrichtung des Werkstücks hinteren Zahnflanken ein Glätten der Zahnflanken nahe der Zahnstirnkanten erfolgt,
und dass der zweite Werkzeugsatz auf der zweiten Seite des Werkstücks jeweils mit einem keilförmigen Werkzeugabschnitt seitlich in die Zahnlücken am Werkstück eingreift, wobei an bezüglich einer Laufrichtung des Werkstücks vorderen Zahnflanken ein Glätten der Zahnflanken nahe der Zahnstirnkanten erfolgt, und an bezüglich der Laufrichtung des Werkstücks hinteren Zahnflanken die Zahnstirnkanten angefast werden. Diese Variante stellt ebenfalls die erfindungsgemäße Anfas- und Glättbearbeitung auch der gegenüberliegenden Stirnseite des Werkstücks zur Verfügung. Bei der hier eingesetzten Winkelaufteilung nimmt derselbe Werkzeugsatz bei derselben Zahnflanke jeweils an beiden Seiten das Anfasen oder an beiden Seiten das Glätten vor, wodurch im Einzelfall Torsionsmomente auf das Werkstück minimiert werden können.

Bevorzugt ist eine Variante, die vorsieht, dass der erste Werkzeugsatz zwei einander gegenüberliegende, miteinander starr verbundene Kegelräder für einen Eingriff seitlich in die Verzahnung des Werkstücks von der ersten Seite und der zweiten Seite umfasst, und der zweite Werkzeugsatz zwei einander gegenüberliegende, miteinander starr verbundene weitere Kegelräder für einen Eingriff seitlich in die Verzahnung des Werkstücks von der ersten Seite und der zweiten Seite umfasst.

Vorteilhaft ist eine Variante, bei der der erste Werkzeugsatz und der zweite Werkzeugsatz einander gegenüberliegend gleichzeitig in das Werkstück eingreifen. Dadurch kann ein Krafteintrag in die Werkstückspindel, auf der das Werkstück gehalten wird, minimiert werden.

Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine schematische Darstellung des Werkzeugeingriffs an einem Werkstück bei einem Anfasen nach dem Stand der Technik;
- Fig. 1b: eine schematische Darstellung eines Werkzeugeingriffs bei einem Werkstück bei einem Glätten nach dem Stand der Technik;
- Fig. 2a: eine schematische Darstellung eines Werkzeugeingriffs bei einem Werkstück gemäß einer ersten Variante des erfindungsgemäßen Verfahrens;
- Fig. 2b: eine schematische Darstellung des resultierenden Werkstücks nach dem Werkzeugeingriff von Fig. 2a;
- Fig. 3: eine schematische Darstellung eines Werkzeugeingriffs bei einem Werkstück gemäß einer zweiten Variante des erfindungsgemäßen Verfahrens;
- Fig. 4: eine schematische Darstellung einer erfindungsgemäßen Bearbeitungsstation zur Durchführung des erfindungsgemäßen Verfahrens, in Aufsicht auf eine Seite des Werkstücks;
- Fig. 5: eine schematische Schrägansicht eines Werkzeugsatzes für die Erfindung;
- Fig. 6: eine schematische Darstellung eines Werkzeugsatzes im Eingriff mit einem Werkstück, mit Blick auf die verzahnte Schmalseite des Werkstücks, gemäß der Erfindung.

### Hintergrund der Erfindung

Nach dem Abwälzfräsen einer Verzahnung an einem Werkstück werden die Zahnkanten angefast, um eine Überhärtung der Zahnkanten bei einer anschließenden Wärmebehandlung zu vermeiden, was bei der Anwendung zu Materialausbrüchen führen könnte, und um eine Verletzungsgefahr beim Handhaben der Zahnräder wegen scharfer Kanten oder Graten zu verringern.

Die Fasen können sowohl zerspanend wie auch umformend hergestellt werden. In Abhängigkeit der Fertigungsmethode sind die Ergebnisse (Fasenwinkel zum Schrägungswinkel, Fasengröße, Fasenverlauf, etc.) unterschiedlich. Im Folgenden werden umformende Verfahren des Anfasens näher betrachtet.

Üblicherweise besteht das Anfaswerkzeug aus zwei verzahnten Scheiben, die beidseitig von der Verzahnung des Werkstücks in die Zahnlücken des Werkstücks eingreifen. Dabei ist die Summe der beiden Fasenwinkel begrenzt auf ca. 50°. Durch die relativ flachen Fasenwinkel wird bei einem Materialabtrag im Falle eines zweiten Schnitts und/oder bei der Hartfeinbearbtung ein großer Teil der Fase entfernt.

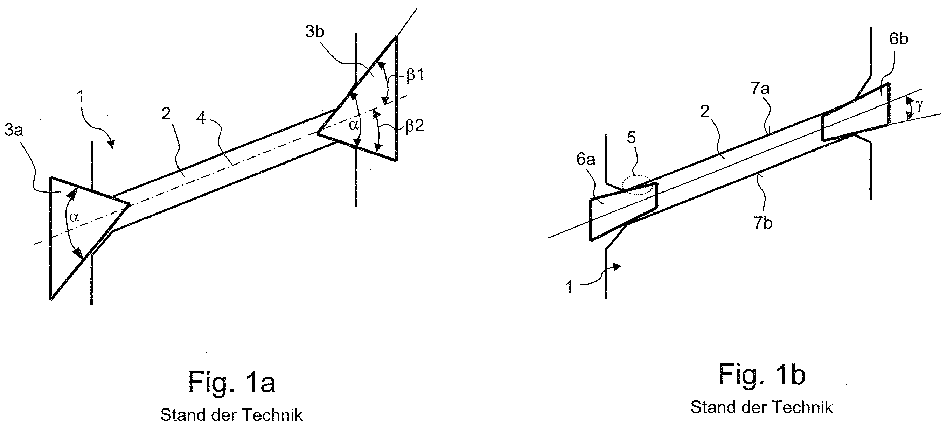

**Fig. 1a** illustriert den beidseitigen Eingriff von keilförmigen Abschnitten 3a, 3b eines Satzes von Anfaswerkzeugen in eine Zahnlücke 2 eines Werkstücks 1 nach dem Stand der Technik, in einer schematischen Aufsicht auf die schmale Seite eines zahnradartigen Werkstücks. Die Abschnitte 3a, 3b des Satzes von Anfaswerkzeugen erzeugen jeweils mit ihren beiden Anlegekanten Fasen am Werkstück 1. Der Innenwinkel α eines keilförmigen Werkzeugabschnitts 3a, 3b ist mechanisch und geometrisch bedingt auf ca. 50° begrenzt. Dadurch ist auch die Summe der Fasenwinkel β1, β2 der Zahnstirnkanten, jeweils gemessen gegen die Schräge (Schrägwinkel) 4, begrenzt. Beispielsweise beträgt β1=20° und β2=30°.

Da beim Anfasen ein Materialaufwurf in den Zahnflanken nahe der Zahnstirnkanten entsteht (etwa im mit Bezugszeichen 5 markierten Bereich), wird das Werkstück 1 im Stand der Technik auch geglättet, vgl. Fig. 1b. Dabei erfolgt ein beidseitiger Eingriff von Abschnitten 6a, 6b eines Satzes von Glättwerkzeugen in die Zahnlücke 2 des Werkstücks 1. Die Kanten der Abschnitte 6a, 6b legen sich dabei mit einem flachen Winkel γ von ca. 4° an die Zahnflanken 7a, 7b an; es werden jeweils beide Kanten eines jeden Abschnitts 6a, 6b des Satzes von Glättwerkzeugen zum Glätten eingesetzt.

### Erfindungsgemäßes Verfahren

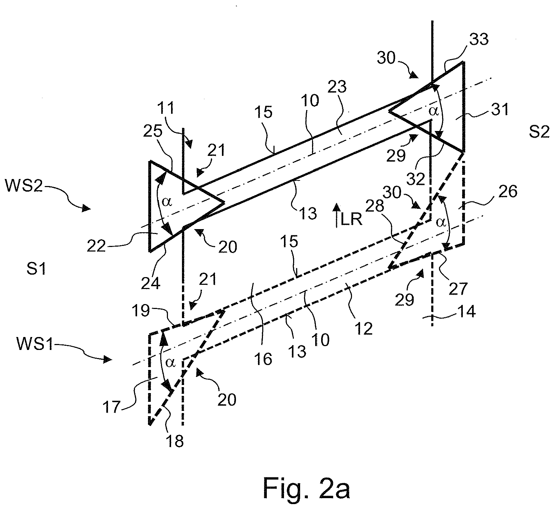

Die Erfindung sieht hingegen vor, mit den zwei Anlegekanten (Anlageflächen) eines keilförmgien Werkzeugabschnitts zu einer Zahnflanke hin anzufasen und zur anderen Zahnflanke hin zu glätten, wie nachfolgend anhand der Fig. 2a näher erläutert wird. Dadurch können große Fasenwinkel an allen Zahnstirnkanten realisiert werden.

An einem Werkstück 11 werden ein erster Werkzeugsatz WS1 (gestrichelt gezeichnet) und ein zweiter Werkzeugsatz WS2 (durchgezogen gezeichnet) eingesetzt, die an einer ersten Stelle des Werkstücks 11 (gestrichelt gezeichnet) und an einer zweiten Stelle des Werkstücks 11 (durchgezogen gezeichnet) eingesetzt werden. Die erste und die zweite Stelle liegen über den Umfang des Werkstücks 11 so weit auseinander, dass sich die Werkzeugsätze WS1, WS2 nicht gegenseitig behindern.

Es soll zunächst die Bearbeitung auf einer ersten, in der Fig. 2a linken Seite S1 des Werkstücks 11 näher illustriert werden.

Der erste Werkzeugsatz WS1 umfasst auf der ersten Seite S1 eine Vielzahl von keilförmigen Werkzeugabschnitten 17 auf einem Kegelrad; zur Vereinfachung ist nur einer dieser keilförmigen Werkzeugabschnitte 17, der gerade in eine Zahnlücke 12 am Werkstück 11 eingreift, dargestellt. Das Werkstück 11 rotiert entsprechend der mit einem Pfeil markierten Laufrichtung LR. Die Zahnlücke 12 wird durch eine in Laufrichtung LR vordere Zahnflanke 13 eines Zahns 14 am Werkstück 11 und weiterhin durch eine hintere Zahnflanke 15 eines Zahns 16 am Werkstück 11 begrenzt.

Der keilförmige Werkzeugabschnitt 17 weist zwei Anlegekanten 18, 19 auf, die einen Innenwinkel α von ca. 50° einschließen. Die Anlegekante 18 erzeugt im Bereich der Zahnstirnkante 20 an der vorderen Zahnflanke 13 eine Fase. Die Anlegekante 19 glättet die hintere Zahnflanke 15 in einem Bereich nahe der Zahnstirnkante 21, wobei sich die Anlegekante 19 mit einem flachen Winkel an die hintere Zahnflanke 15 anlegt.

Der zweite Werkzeugsatz WS2 verfügt über keilförmige Werkzeugabschnitte 22 auf einem weiteren Kegelrad; zur Vereinfachung ist wiederum nur einer dieser keilförmigen Werkzeugabschnitte 22, der gerade in eine Zahnlücke 23 am Werkstück 11 eingreift, dargestellt. Man beachte, dass die Zahnlücken 12 und 23 hier zum besseren Verständnis direkt übereinander dargestellt sind, in der Praxis jedoch meist um einen erheblichen Teil des Umfangs des Werkstücks 11 auseinander liegen, etwa um die Hälfte des Umfangs. Die Zahnlücke 23 wird wiederum durch eine bezüglich der Laufrichtung LR vordere Zahnflanke 13 und eine hintere Zahnflanke 15 begrenzt.

Der keilförmige Werkzeugabschnitt 22 weist ebenfalls zwei Anlegekanten 24, 25 auf, die einen Innenwinkel α von ca. 50° einschließen. Die Anlegekante 25 erzeugt im Bereich der Zahnstirnkante 21 an der hinteren Zahnflanke 15 eine Fase. Die Anlegekante 24 glättet die vordere Zahnflanke 13 in einem Bereich nahe der Zahnstirnkante 20, wobei sich die Anlegekante 24 mit einem flachen Winkel an die vordere Zahnflanke 13 anlegt.

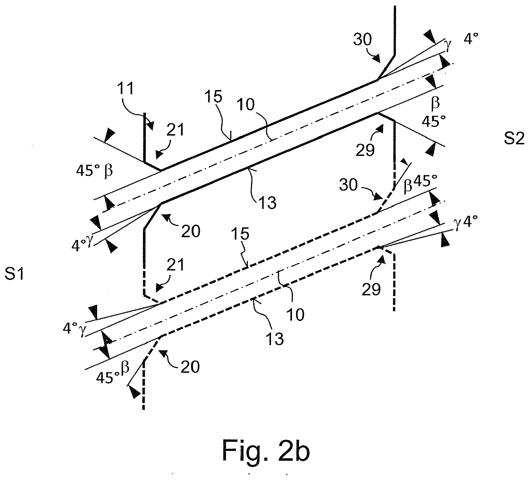

Durch die beiden keilförmigen Werkzeugabschnitte 17, 22 werden alle Zahnstirnkanten 20, 21 des Werkstücks 11 auf der ersten Seite S1 mit einem Winkel β von ca. 45° angefast, und alle Zahnflanken 13, 15 werden nahe den Zahnstirnkanten 20, 21 der ersten Seite S1 unter einem Winkel γ von ca. 4° geglättet, wie auch aus der **Fig. 2b** ersichtlich ist. Die Winkel β und γ werden zwischen einer Tangente der Fase bzw. des geglätteten Zahnflankenabschnitts gegen die Schräge (Schrägwinkel) 10 der Verzahnung des Werkstücks 11 oder gegen die Tangente der unveränderten Zahnflanke 13, 15 gemessen (was wegen der Parallelität der Schräge 10 und den unveränderten Zahnflanken 13, 15 zu denselben Winkeln führt).

Im Folgenden soll die Bearbeitung auf der zweiten, in Fig. 2a rechten Seite S2 des Werkstücks 11 anhand der **Fig. 2a** näher erläutert werden.

Der erste Werkzeugsatz WS1 weist auf der zweiten Seite S2 eine Vielzahl von keilförmigen Werkzeugabschnitten 26 auf einem Kegelrad auf; zur Vereinfachung ist wieder nur einer dieser keilförmigen Werkzeugabschnitte 26, der gerade in die Zahnlücke 12 am Werkstück 11 eingreift, dargestellt.

Der keilförmige Werkzeugabschnitt 26 weist zwei Anlegekanten 27, 28 auf, die einen Innenwinkel α von ca. 50° einschließen. In der vorgestellten Variante erzeugt die Anlegekante 28 im Bereich der Zahnstirnkante 30 an der hinteren Zahnflanke 15 eine Fase. Die Anlegekante 27 glättet die vordere Zahnflanke 13 in einem Bereich nahe der Zahnstirnkante 29, wobei sich die Anlegekante 27 mit einem flachen Winkel an die vordere Zahnflanke 13 anlegt.

Der zweite Werkzeugsatz WS2 weist auf der zweiten Seite S2 eine Vielzahl von keilförmigen Werkzeugabschnitten 31 auf einem Kegelrad auf; zur Vereinfachung ist wieder nur einer dieser keilförmigen Werkzeugabschnitte 31, der gerade in eine Zahnlücke 23 am Werkstück 11 eingreift, dargestellt.

Der keilförmige Werkzeugabschnitt 31 weist zwei Anlegekanten 32, 33 auf, die einen Innenwinkel α von ca. 50° einschließen. Die Anlegekante 32 erzeugt im Bereich der Zahnstirnkante 29 an der vorderen Zahnflanke 13 eine Fase. Die Anlegekante 33 glättet die hintere Zahnflanke 15 in einem Bereich nahe der Zahnstirnkante 30, wobei sich die Anlegekante 33 mit einem flachen Winkel an die hintere Zahnflanke 15 anlegt.

Durch die beiden keilförmigen Werkzeugabschnitte 26, 31 werden alle Zahnstirnkanten 29, 30 des Werkstücks 11 auf der zweiten Seite S2 mit einem Winkel β von ca. 45° angefast, und alle Zahnflanken 13, 15 werden nahe den Zahnstirnkanten 29, 30 der ersten Seite S1 unter einem Winkel γ von ca. 4° geglättet, wie auch aus der **Fig. 2b** ersichtlich ist.

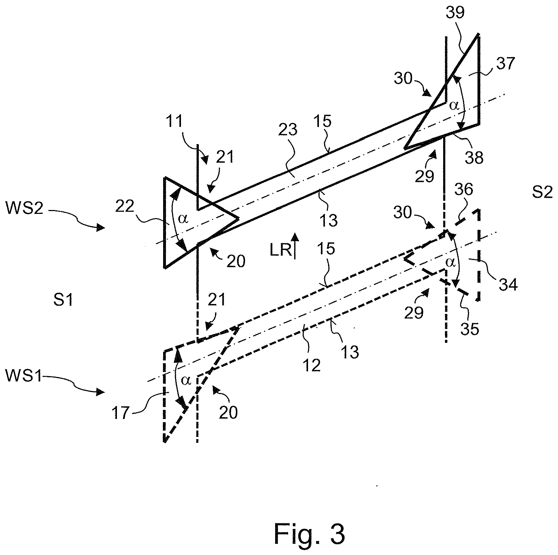

In der **Fig. 3** wird eine Abwandlung der in Fig. 2a, 2b illustrierten Variante des erfindungsgemäßen Verfahrens vorgestellt. Die Bearbeitung auf der ersten Seite S1 entspricht dabei vollständig der Bearbeitung auf der ersten Seite der Variante von Fig. 2a, 2b. Im Folgenden wird die Bearbeitung an der zweiten Seite S2 näher vorgestellt.

Der erste Werkzeugsatz WS1 weist auf der zweiten Seite S2 eine Vielzahl von keilförmigen Werkzeugabschnitten 34 auf einem Kegelrad auf; zur Vereinfachung ist wieder nur einer dieser keilförmigen Werkzeugabschnitte 34, der gerade in die Zahnlücke 12 am Werkstück 11 eingreift, dargestellt.

Der keilförmige Werkzeugabschnitt 34 weist zwei Anlegekanten 35, 36 auf, die einen Innenwinkel α von ca. 50° einschließen. Die Anlegekante 35 erzeugt in dieser Variante im Bereich der Zahnstirnkante 29 an der vorderen Zahnflanke 13 eine Fase. Die Anlegekante 36 glättet die hintere Zahnflanke 15 in einem Bereich nahe der Zahnstirnkante 30, wobei sich die Anlegekante 36 mit einem flachen Winkel an die hintere Zahnflanke 15 anlegt.

Der zweite Werkzeugsatz WS2 weist auf der zweiten Seite S2 eine Vielzahl von keilförmigen Werkzeugabschnitten 37 auf einem Kegelrad auf; zur Vereinfachung ist wieder nur einer dieser keilförmigen Werkzeugabschnitte 37, der gerade in die Zahnlücke 23 am Werkstück 11 eingreift, dargestellt.

Der keilförmige Werkzeugabschnitt 37 weist zwei Anlegekanten 38, 39 auf, die einen Innenwinkel α von ca. 50° einschließen. In dieser Variante erzeugt die Anlegekante 39 im Bereich der Zahnstirnkante 30 an der hinteren Zahnflanke 15 eine Fase. Die Anlegekante 38 glättet die vordere Zahnflanke 13 in einem Bereich nahe der Zahnstirnkante 29, wobei sich die Anlegekante 38 mit einem flachen Winkel an die vordere Zahnflanke 13 anlegt.

Auch in dieser Variante werden durch die beiden keilförmigen Werkzeugabschnitte 34, 37 alle Zahnstirnkanten 29, 30 des Werkstücks 11 auf der zweiten Seite S2 mit einem Winkel β von ca. 45° angefast, und alle Zahnflanken 13, 15 werden nahe den Zahnstirnkanten 29, 30 der ersten Seite S1 unter einem Winkel γ von ca. 4° geglättet, entsprechend Fig. 2b.

In der Variante von Fig. 3 erzeugt der erste Werkzeugsatz WS1 auf beiden Seiten S1, S2 jeweils an der hinteren Zahnflanke 15 die Glättung, und an der vorderen Zahnflanke 13 die Fasen. Der zweite Werkzeugsatz WS2 erzeugt auf beiden Seiten S1, S2 jeweils an den vorderen Zahnflanken 13 die Glättung, und an den hinteren Zahnflanken 15 die Fasen.

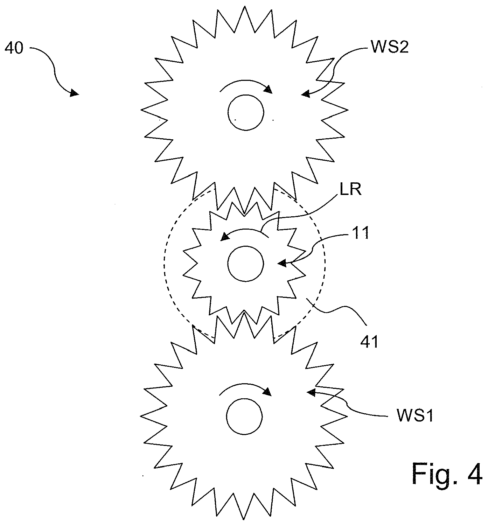

**Fig. 4** zeigt in schematischer Aufsicht eine Ansicht einer Ausführungsform einer erfindungsgemäßen Bearbeitungsstation 40 zur Ausführung des erfindungsgemäßen Verfahrens zum kombinierten Anfasen und Glätten eines verzahnten Werkstücks 11.

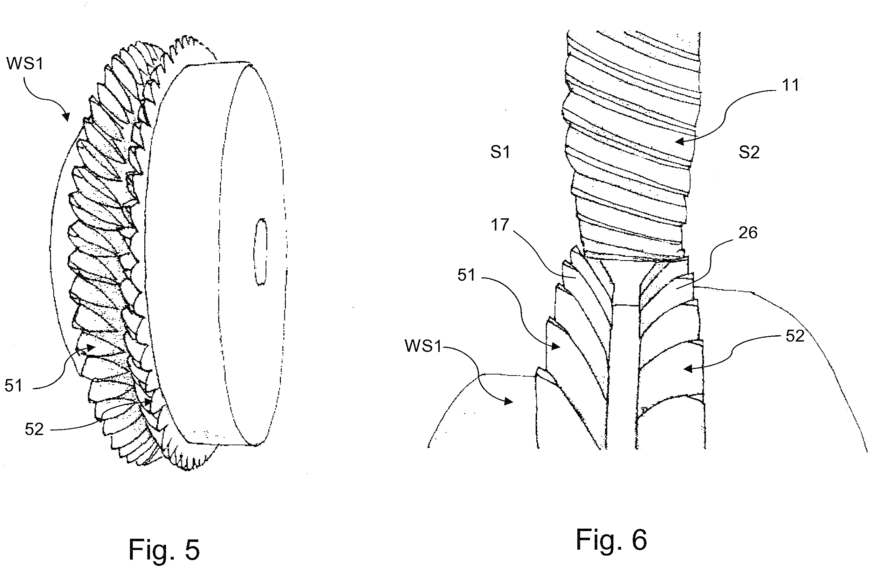

Das verzahnte Werkstück 11, das auf einer Werkstückspindel 41 angeordnet ist und für das Verfahren mittels der Werkstückspindel 41 in Laufrichtung LR motorisch gedreht wird, steht in der gezeigten Ausführungsform in Eingriff mit einem ersten Werkzeugsatz WS1 und einem zweiten Werkzeugsatz WS2, die jeweils verzahnte Kegelräder umfassen (vgl. Fig. 5). Die Werkzeugsätze WS1, WS2 sind ihrerseits drehbar (siehe Pfeilrichtungen), typischerweise frei drehbar oder auch motorisch drehbar. Die beiden Werkzeugsätze WS1, WS2 rollen während der erfindungsgemäßen Bearbeitung des Werkstücks 11 am Werkstück 11 ab. Die Werkzeugsätze WS1, WS2 können in näherungsweise radialer Richtung (in Fig. 4 nach oben bzw. unten) zugestellt werden.

Die Werkzeugsätze WS1, WS2 greifen an verschiedenen Stellen am Umfang des Werkstücks 11 in das Werkstück 11 ein, nämlich an um 180° versetzten Stellen, so dass das Werkstück 11 zwischen ihnen angeordnet ist.

Die Werkzeugsätze WS1, WS2 sind so verzahnt, dass die Zähne der Kegelräder der Werkzeugsätze WS1, WS2 jeweils als keilförmige Werkzeugabschnitte genutzt werden können, mit denen jeweils zu einem ersten anliegenden Zahn des Werkstücks 11 hin ein Anfasen und zu einem zweiten anliegenden Zahn hin ein Glätten erfolgt (vgl. hierzu z.B. Fig. 2a).

In **Fig. 5** ist eine schematische Schrägansicht auf den ersten Werkzeugsatz WS1 von Fig. 4 dargestellt. Der erste Werkzeugsatz WS1 umfasst zwei einander gegenüberliegende, miteinander starr verbundene Kegelräder 51, 52. Analog ist auch der zweite Werkzeugsatz WS2 von Fig. 4 ausgebildet (nicht näher dargestellt).

Die Kegelräder 51, 52 des ersten Werkzeugsatzes WS1 von Fig. 5 greifen mit ihren Zähnen, wie in **Fig. 6** dargestellt, gleichzeitig in die Verzahnung des Werkstücks 11 ein. Auf der ersten Seite S1 des Werkstücks 11 greifen dabei die Zähne des Kegelrads 51 seitlich in die Verzahnung des Werkstücks 11 ein; die Zähne des Kegelrads 51 stellen dabei keilförmige Werkzeugabschnitte 17 dar. Auf der zweiten Seite S2 des Werkstücks 11 greifen die Zähne des Kegelrads 52 seitlich in die Verzahnung des Werkstücks 11 ein; die Zähne des Kegelrads 52 stellen dabei keilförmige Werkzeugabschnitte 26 dar.

Analog greifen auch die Kegelräder des zweiten Werkzeugsatzes WS2 von Fig. 4 in das Werkzeug 11 ein (nicht näher dargestellt).

## Patentansprüche

1. Verfahren zur Bearbeitung eines verzahnten Werkstücks (11),
wobei das Werkstück (11) auf einer sich drehenden Werkstückspindel (41) aufgespannt ist und mit einem ersten (WS1) und einem zweiten Werkzeugsatz (WS2) in das Werkstück (11) eingegriffen wird,
wobei zumindest auf einer ersten Seite (S1) des Werkstücks (11) ein Anfasen an Zahnstirnkanten (20, 21, 29, 30) und ein Glätten von Zahnflanken (13, 15) nahe der Zahnstirnkanten (20, 21, 29, 30) erfolgt, wobei der erste Werkzeugsatz (WS1) auf der ersten Seite (S1) des Werkstücks (11) jeweils mit einem keilförmigen Werkzeugabschnitt (17) seitlich in die Zahnlücken (12) am Werkstück (11) eingreift, wobei an bezüglich einer Laufrichtung (LR) des Werkstücks (11) vorderen Zahnflanken (13) die Zahnstirnkanten (20) angefast werden, und an bezüglich der Laufrichtung (LR) des Werkstücks (11) hinteren Zahnflanken (15) ein Glätten der Zahnflanken (15) nahe der Zahnstirnkanten (21) erfolgt,
und wobei der zweite Werkzeugsatz (WS2) auf der ersten Seite (S1) des Werkstücks (11) jeweils mit einem keilförmigen Werkzeugabschnitt (22) seitlich in die Zahnlücken (23) am Werkstück (11) eingreift, wobei an bezüglich einer Laufrichtung (LR) des Werkstücks (11) vorderen Zahnflanken (13) ein Glätten der Zahnflanken (13) nahe der Zahnstirnkanten (20) erfolgt, und an bezüglich der Laufrichtung (LR) des Werkstücks (11) hinteren Zahnflanken (15) die Zahnstirnkanten (21) angefast werden,
**dadurch gekennzeichnet,**
**dass** der erste Werkzeugsatz (WS1) auf der ersten Seite (S1) des Werkstücks (11) eine Vielzahl der keilförmigen Werkzeugabschnitte (17) auf einem Kegelrad (51) umfasst, und der zweite Werkzeugsatz (WS2) auf der ersten Seite (S1) des Werkstücks (11) eine Vielzahl der keilförmigen Werkzeugabschnitte (22) auf einem weiteren Kegelrad umfasst,
und **dass** der erste Werkzeugsatz (WS1) und der zweite Werkzeugsatz (WS2) an bezüglich eines ortsfesten Bezugssystems verschiedenen Stellen am Umfang des Werkstücks (11) in das Werkstück (11) eingreifen.

2. Verfahren nach Anspruch 1, **dadurch gekennzeichnet, dass** das Anfasen der Zahnstirnkanten (20, 21, 29, 30) jeweils mit einem Winkel (β) von wenigstens 35°, bevorzugt wenigstens 40°, besonders bevorzugt wenigstens 45°, gemessen gegen eine Schrägung (10) der Verzahnung am Werkstück (11), erfolgt.

3. Verfahren nach Anspruch 1 oder 2, **dadurch gekennzeichnet, dass** das Glätten jeweils mit einem Winkel (γ) von maximal 5°, bevorzugt maximal 4°, gemessen gegen eine Schrägung (10) der Verzahnung am Werkstück (11), erfolgt.

4. Verfahren nach einem der Ansprüche 1 bis 3, **dadurch gekennzeichnet, dass** auch auf einer zweiten Seite (S2) des Werkstücks (11) ein Anfasen an Zahnstirnkanten (29, 30) und ein Glätten von Zahnflanken (13, 15) nahe der Zahnstirnkanten (29, 30) erfolgt,
dass der erste Werkzeugsatz (WS1) auf der zweiten Seite (S2) des Werkstücks (11) jeweils mit einem keilförmigen Werkzeugabschnitt (26) seitlich in die Zahnlücken (12) am Werkstück (11) eingreift, wobei an bezüglich einer Laufrichtung (LR) des Werkstücks (11) vorderen Zahnflanken (13) ein Glätten der Zahnflanken (13) nahe der Zahnstirnkanten (29) erfolgt, und an bezüglich der Laufrichtung (LR) des Werkstücks (11) hinteren Zahnflanken (15) die Zahnstirnkanten (30) angefast werden,
und dass der zweite Werkzeugsatz (WS2) auf der zweiten Seite (S2) des Werkstücks (11) jeweils mit einem keilförmigen Werkzeugabschnitt (31) seitlich in die Zahnlücken (23) am Werkstück (11) eingreift, wobei an bezüglich einer Laufrichtung (LR) des Werkstücks (11) vorderen Zahnflanken (13) die Zahnstirnkanten (29) angefast werden, und an bezüglich der Laufrichtung (LR) des Werkstücks (11) hinteren Zahnflanken (15) ein Glätten der Zahnflanken (15) nahe der Zahnstirnkanten (30) erfolgt.

5. Verfahren nach einem der Ansprüche 1 bis 3, **dadurch gekennzeichnet, dass** auch auf einer zweiten Seite (S2) des Werkstücks (11) ein Anfasen an Zahnstirnkanten (29, 30) und ein Glätten von Zahnflanken (13, 15) nahe der Zahnstirnkanten (29, 30) erfolgt,
dass der erste Werkzeugsatz (WS1) auf der zweiten Seite (S2) des Werkstücks (11) jeweils mit einem keilförmigen Werkzeugabschnitt (34) seitlich in die Zahnlücken (12) am Werkstück (11) eingreift, wobei an bezüglich einer Laufrichtung (LR) des Werkstücks (11) vorderen Zahnflanken (13) die Zahnstirnkanten (29) angefast werden, und an bezüglich der Laufrichtung (LR) des Werkstücks (11) hinteren Zahnflanken (15) ein Glätten der Zahnflanken (15) nahe der Zahnstirnkanten (30) erfolgt,
und dass der zweite Werkzeugsatz (WS2) auf der zweiten Seite (S2) des Werkstücks (11) jeweils mit einem keilförmigen Werkzeugabschnitt (37) seitlich in die Zahnlücken (23) am Werkstück (11) eingreift, wobei an bezüglich einer Laufrichtung (LR) des Werkstücks (11) vorderen Zahnflanken (13) ein Glätten der Zahnflanken (13) nahe der Zahnstirnkanten (29) erfolgt, und an bezüglich der Laufrichtung (LR) des Werkstücks (11) hinteren Zahnflanken (15) die Zahnstirnkanten (30) angefast werden.

6. Verfahren nach einem der Ansprüche 4 oder 5, **dadurch gekennzeichnet, dass** der erste Werkzeugsatz (WS1) zwei einander gegenüberliegende, miteinander starr verbundene Kegelräder (51, 52) für einen Eingriff seitlich in die Verzahnung des Werkstücks (11) von der ersten Seite (S1) und der zweiten Seite (S2) umfasst, und der zweite Werkzeugsatz (WS2) zwei einander gegenüberliegende, miteinander starr verbundene weitere Kegelräder für einen Eingriff seitlich in die Verzahnung des Werkstücks (11) von der ersten Seite (S1) und der zweiten Seite (S2) umfasst.

7. Verfahren nach einem der vorhergehenden Ansprüche, **dadurch gekennzeichnet, dass** der erste Werkzeugsatz (WS1) und der zweite Werkzeugsatz (WS2) einander gegenüberliegend gleichzeitig in das Werkstück (11) eingreifen.

## Claims

1. Method for processing a toothed workpiece (11), wherein the workpiece (11) is clamped on a rotating workpiece spindle (41) and a first tool set (WS1) and a second tool set (WS2) engage in the workpiece (11),
wherein at least at a first side (S1) of the workpiece (11) a chamfering is carried out at tooth end face edges (20, 21, 29, 30) and a smoothing of tooth flanks (13, 15) is carried out close to the tooth end face edges (20, 21, 29, 30),
wherein the first tool set (WS1) engages at the first side (S1) of the workpiece (11) with a wedge-like tool portion (17) laterally in the tooth gaps (12) in the workpiece (11), wherein the tooth end face edges (20) are chamfered on front tooth flanks (13) with respect to a running direction (LR) of the workpiece (11), and a smoothing of the tooth flanks (15) is carried out close to the tooth end face edges (21) on rear tooth flanks (15) with respect to the running direction (LR) of the workpiece (11),
and wherein the second tool set (WS2) engages at the first side (S1) of the workpiece (11) with a wedge-like tool portion (22) laterally in the tooth gaps (23) in the workpiece (11), wherein a smoothing of the tooth flanks (13) is carried out close to the tooth end face edges (20) on front tooth flanks (13) with respect to a running direction (LR) of the workpiece (11), and the tooth end face edges (21) are chamfered on rear tooth flanks (15) with respect to the running direction (LR) of the workpiece (11),
**characterised in that**
the first tool set (WS1) at the first side (S1) of the workpiece (11) comprises a plurality of the wedge-like tool portions (17) on a bevel gear (51), and the second tool set (WS2) at the first side (S1) of the workpiece (11) comprises a plurality of the wedge-like tool portions (22) on another bevel gear,
and **in that** the first tool set (WS1) and the second tool set (WS2) engage in the workpiece (11) at different locations on the periphery of the workpiece (11) with respect to a fixed reference system.

2. Method according to claim 1, **characterised in that** the chamfering of the tooth end face edges (20, 21, 29, 30) is carried out at an angle (β) of at least 35°, preferably at least 40°, in a particularly preferred manner at least 45°, measured relative to an inclination (10) of the tooth arrangement on the workpiece (11).

3. Method according to claim 1 or claim 2, **characterised in that** the smoothing is carried out at an angle (γ) of a maximum of 5°, preferably a maximum of 4°, measured relative to an inclination (10) of the tooth arrangement on the workpiece (11).

4. Method according to any one of claims 1 to 3,
**characterised in that** also at a second side (S2) of the workpiece (11) a chamfering is carried out on tooth end face edges (29, 30) and a smoothing of tooth flanks (13, 15) is carried out close to the tooth end face edges (29, 30),
**in that** the first tool set (WS1) engages at the second side (S2) of the workpiece (11) with a wedge-like tool portion (26) laterally in the tooth gaps (12) in the workpiece (11), wherein the tooth flanks (13) are smoothed close to the tooth end face edges (29) on front tooth flanks (13) with respect to a running direction (LR) of the workpiece (11), and the tooth end face edges (30) are chamfered on rear tooth flanks (15) with respect to the running direction (LR) of the workpiece (11),
and **in that** the second tool set (WS2) engages at the second side (S2) of the workpiece (11) with a wedge-like tool portion (31) laterally in the tooth gaps (23) in the workpiece (11), wherein the tooth end face edges (29) are chamfered on front tooth flanks (13) with respect to a running direction (LR) of the workpiece (11), and the tooth flanks (15) are smoothed close to the tooth end face edges (30) on rear tooth flanks (15) with respect to the running direction (LR) of the workpiece (11).

5. Method according to any one of claims 1 to 3,
**characterised in that** also at a second side (S2) of the workpiece (11) a chamfering is carried out on tooth end face edges (29, 30) and a smoothing of tooth flanks (13, 15) is carried out close to the tooth end face edges (29, 30),
**in that** the first tool set (WS1) at the second side (S2) of the workpiece (11) engages with a wedge-like tool portion (34) laterally in the tooth gaps (12) in the workpiece (11), wherein the tooth end face edges (29) are chamfered on front tooth flanks (13) with respect to a running direction (LR) of the workpiece (11), and a smoothing of the tooth flanks (15) is carried out close to the tooth end face edges (30) on rear tooth flanks (15) with respect to the running direction (LR) of the workpiece (11), and
**in that** the second tool set (WS2) at the second side (S2) of the workpiece (11) engages with a wedge-like tool portion (37) laterally in the tooth gaps (23) in the workpiece (11), wherein the tooth flanks (13) are smoothed close to the tooth end face edges (29) on front tooth flanks (13) with respect to a running direction (LR) of the workpiece (11), and the tooth end face edges (30) are chamfered on rear tooth flanks (15) with respect to the running direction (LR) of the workpiece (11).

6. Method according to either claim 4 or claim 5,
**characterised in that** the first tool set (WS1) comprises two mutually opposing bevel gears (51, 52) which are rigidly connected to each other for engagement laterally in the tooth arrangement of the workpiece (11) from the first side (S1) and the second side (S2), and the second tool set (WS2) comprises two mutually opposing further bevel gears which are rigidly connected to each other for engagement laterally in the tooth arrangement of the workpiece (11) from the first side (S1) and the second side (S2).

7. Method according to any one of the preceding claims,
**characterised in that** the first tool set (WS1) and the second tool set (WS2) engage at the same time in the workpiece (11) facing each other.

## Revendications

1. Procédé d'usinage d'une pièce dentée (11),
sachant que ladite pièce (11) est abloquée sur une broche rotative (41) porte-pièces et qu'une intervention s'opère, dans ladite pièce (11), au moyen de premier (WS1) et second (WS2) jeux d'outils,
au moins un premier côté (S1) de ladite pièce (11) étant soumis à un chanfreinage effectué sur des arêtes frontales (20, 21, 29, 30) des dents, et à un lissage effectué sur des flancs (13, 15) des dents à proximité desdites arêtes frontales (20, 21, 29, 30) desdites dents, sachant que le premier jeux d'outils (WS1) pénètre latéralement dans les entredents (12) de la pièce (11), sur le premier côté (S1) de ladite pièce (11), par un tronçon d'outil cunéiforme (17) respectif, les arêtes frontales (20) des dents étant chanfreinées sur des flancs (13) desdites dents situés à l'avant par rapport à un sens de défilement (LR) de la pièce (11), et un lissage de flancs (15) des dents, situés à l'arrière par rapport audit sens de défilement (LR) de la pièce (11), étant effectué à proximité des arêtes frontales (21) desdites dents,
et sachant que le second jeux d'outils (WS2) pénètre latéralement dans les entredents (23) de la pièce (11), sur le premier côté (S1) de ladite pièce (11), par un tronçon d'outil cunéiforme (22) respectif, un lissage de flancs (13) des dents, situés à l'avant par rapport à un sens de défilement (LR) de la pièce (11), étant effectué à proximité des arêtes frontales (20) desdites dents, et les arêtes frontales (21) des dents étant chanfreinées sur des flancs (15) desdites dents situés à l'arrière par rapport audit sens de défilement (LR) de la pièce (11),
**caractérisé par le fait**
**que** le premier jeux d'outils (WS1) comporte, sur le premier côté (S1) de la pièce (11), les tronçons d'outils cunéiformes (17) agencés en une multiplicité sur une roue conique (51) et le second jeux d'outils (WS2) comporte, sur ledit premier côté (S1) de la pièce (11), les tronçons d'outils cunéiformes (22) agencés en une multiplicité sur une roue conique supplémentaire ;
et par le fait que ledit premier jeux d'outils (WS1) et ledit second jeux d'outils (WS2) pénètrent dans la pièce (11), sur le pourtour de ladite pièce (11), en des emplacements différents par rapport à un système de référence fixe.

2. Procédé selon la revendication 1, **caractérisé par le fait que** le chanfreinage des arêtes frontales (20, 21, 29, 30) des dents s'opère à chaque fois, sur la pièce (11), suivant un angle (β) d'au moins 35°, de préférence d'au moins 40°, d'au moins 45° avec préférence particulière, mesuré par rapport à une obliquité (10) de la denture.

3. Procédé selon la revendication 1 ou 2, **caractérisé par le fait que** le lissage s'opère à chaque fois, sur la pièce (11), suivant un angle (γ) de 5° au maximum, préférentiellement de 4° au maximum, mesuré par rapport à une obliquité (10) de la denture.

4. Procédé selon l'une des revendications 1 à 3, **caractérisé par le fait qu'**un chanfreinage effectué sur des arêtes frontales (29, 30) des dents, et un lissage de flancs (13, 15) desdites dents à proximité desdites arêtes frontales (29, 30), s'opèrent également sur un second côté (S2) de la pièce (11) ;
**par le fait que** le premier jeux d'outils (WS1) pénètre latéralement dans les entredents (12) de la pièce (11) sur ledit second côté (S2) de ladite pièce (11), par un tronçon d'outil cunéiforme (26) respectif, sachant qu'un lissage de flancs (13) des dents situés à l'avant par rapport à un sens de défilement (LR) de la pièce (11), est effectué à proximité des arêtes frontales (29) desdites dents, et que les arêtes frontales (30) desdites dents sont chanfreinées sur des flancs (15) des dents situés à l'arrière par rapport audit sens de défilement (LR) de ladite pièce (11) ;
et **par le fait que** le second jeux d'outils (WS2) pénètre latéralement dans les entredents (23) de la pièce (11), sur ledit second côté (S2) de ladite pièce (11), par un tronçon d'outil cunéiforme (31) respectif, sachant que les arêtes frontales (29) des dents sont chanfreinées sur des flancs (13) desdites dents situés à l'avant par rapport à un sens de défilement (LR) de la pièce (11), et qu'un lissage de flancs (15) des dents, situés à l'arrière par rapport audit sens de défilement (LR) de ladite pièce (11), s'opère à proximité des arêtes frontales (30) desdites dents.

5. Procédé selon l'une des revendications 1 à 3, **caractérisé par le fait qu'**un chanfreinage effectué sur des arêtes frontales (29, 30) des dents, et un lissage de flancs (13, 15) desdites dents à proximité desdites arêtes frontales (29, 30), s'opèrent également sur un second côté (S2) de la pièce (11) ;
**par le fait que** le premier jeux d'outils (WS1) pénètre latéralement dans les entredents (12) de la pièce (11) sur ledit second côté (S2) de ladite pièce (11), par un tronçon d'outil cunéiforme (34) respectif, sachant que les arêtes frontales (29) des dents sont chanfreinées sur des flancs (13) desdites dents situés à l'avant par rapport à un sens de défilement (LR) de la pièce (11), et qu'un lissage des flancs (15) des dents, situés à l'arrière par rapport audit sens de défilement (LR) de ladite pièce (11), s'opère à proximité des arêtes frontales (30) desdites dents ;
et **par le fait que** le second jeux d'outils (WS2) pénètre latéralement dans les entredents (23) de la pièce (11), sur ledit second côté (S2) de ladite pièce (11), par un tronçon d'outil cunéiforme (37) respectif, sachant qu'un lissage des flancs (13) des dents, situés à l'avant par rapport à un sens de défilement (LR) de ladite pièce (11), s'opère à proximité des arêtes frontales (29) desdites dents, et que les arêtes frontales (30) desdites dents sont chanfreinées sur des flancs (15) desdites dents situés à l'arrière par rapport audit sens de défilement (LR) de ladite pièce (11).

6. Procédé selon l'une des revendications 4 ou 5, **caractérisé par le fait que** le premier jeux d'outils (WS1) comprend deux roues coniques (51, 52) tournées à l'opposé et reliées rigidement l'une à l'autre, en vue d'une pénétration latérale dans la denture de la pièce (11) à partir du premier côté (S1) et du second côté (S2), et le second jeux d'outils (WS2) comprend deux roues coniques supplémentaires, tournées à l'opposé et reliées rigidement l'une à l'autre, en vue d'une pénétration latérale dans la denture de ladite pièce (11) à partir dudit premier côté (S1) et dudit second côté (S2).

7. Procédé selon l'une des revendications précédentes, **caractérisé par le fait que** le premier jeux d'outils (WS1) et le second jeux d'outils (WS2) pénètrent dans la pièce (11) en simultanéité, et à l'opposé l'un de l'autre.
